# EUROPEAN PATENT SPECIFICATION

(11) **EP 4 350 842 B1**
(45) Date of publication and mention of the grant of the patent: **18.06.2025**
(21) Application number: 22204338.2
(22) Date of filing: 28.10.2022
(51) Int. Cl.: H01M 10/613, H01M 10/647, H01M 10/6554, H01M 10/6556

(54) **BATTERY PACK SHELL AND BATTERY PACK**
BATTERIEPACKSCHALE UND BATTERIEPACK
COQUE DE BLOC-BATTERIE ET BLOC-BATTERIE

(30) Priority: 16.09.2022 CN 202211125705
(43) Date of publication of application: 10.04.2024
(73) Proprietor: CALB Co., Ltd., Changzhou City, Jiangsu Province (CN)
(72) Inventor: DENG, Feng, Changzhou City, Jiangsu Province (CN); CAO, Zhijuan, Changzhou City, Jiangsu Province (CN)
(74) Representative: Becker, Eberhard

(56) References cited:
- WO-A1-2020/135153
- CN-U- 214 542 426
- CN-U- 215 989 052

## Description

### BACKGROUND

### Technical Field

The invention relates to the technical field of batteries, and particularly, to a battery pack shell and a battery pack.

### Description of Related Art

A battery pack generally includes a battery pack shell and a battery disposed within the battery pack shell. The battery pack shell generally includes a frame, a liquid cooling plate and a bottom guard plate at the bottom, and the bottom guard plate and frame are each disposed on the upper and lower sides of the liquid cooling plate. The bottom guard plate, the liquid cooling plate, and the frame are fixed by fasteners, a sealing strip is disposed between the liquid cooling plate and the frame, and the connection between the liquid cooling plate and the frame can be sealed by the sealing strip. Accordingly, how to improve the sealing effect of the sealing strip as well as implementing the fixation of the bottom guard plate, the liquid cooling plate, and the frame is a technical problem to be solved urgently by those skilled in the art.

CN214542426U discloses a battery pack lower shell, which comprises a frame, a water cooling plate and a bottom protection plate, wherein the frame is internally fixedly connected with a plurality of crossbeams which are arranged side by side; wherein, be equipped with seal structure between water-cooling board and the frame, and have a plurality of end backplate strengthening ribs of vertically arranging on the backplate at the bottom to be equipped with the sealing strip between backplate at the bottom and water-cooling board, and be formed with inclosed cavity between backplate at the bottom and water-cooling board.

### SUMMARY

The embodiments of the invention provide a battery pack shell and a battery pack.

For one aspect, embodiments of the invention provide a battery pack shell, including a bottom guard plate, a bottom heat exchange plate and a frame disposed on the bottom guard plate in sequence.

A first sealing strip is disposed between the bottom heat exchange plate and the frame, and the first sealing strip is configured to seal a connection between the bottom heat exchange plate and the frame. The bottom heat exchange plate and the frame are fixed by a first fastener, the bottom guard plate and the frame are fixed by a second fastener, and the bottom heat exchange plate is sandwiched between the bottom guard plate and the frame. The number of the first fasteners and the number of the second fasteners are plural, and each of the first fasteners and each of the second fasteners are disposed around and along the frame into a circle.

A first distance between a center of any adjacent first fasteners and a center of the second fastener is 100 mm to 600 mm, a distance between an edge of the first sealing strip facing the first fastener and a center of any one of the first fasteners is the second distance, and a product of the first distance and the second distance is 400 mm² to 15000 mm².

Accordingly, when the bottom heat exchange plate and the frame are fixed by the first fastener, and the bottom guard plate and the frame are fixed by the second fastener, different fasteners may be configured for fixing the bottom heat exchange plate and the frame and for fixing the bottom guard plate and the frame, respectively. Moreover, when the first sealing strip for sealing the connection between the frame and the bottom heat exchange plate is configured, the sealing of the connection between the frame and the bottom heat exchange plate may be implemented through the first sealing strip.

For another aspect, the embodiments of the invention provide a battery pack, including the battery pack shell provided by the embodiments of the invention, and a battery disposed within the battery pack shell.

Accordingly, when the bottom heat exchange plate and the frame are fixed by the first fastener, and the bottom guard plate and the frame are fixed by the second fastener, different fasteners may be configured for fixing the bottom heat exchange plate and the frame and for fixing the bottom guard plate and the frame, respectively. Moreover, when the first sealing strip for sealing the connection between the frame and the bottom heat exchange plate is configured, the sealing of the connection between the frame and the bottom heat exchange plate may be implemented through the first sealing strip.

### BRIEF DESCRIPTION OF THE DRAWING

For a better understanding of the disclosure, reference may be made to exemplary embodiments shown in the following drawings. The components in the drawings are not necessarily to scale and related elements may be omitted, or in some instances proportions may have been exaggerated, so as to emphasize and clearly illustrate the features described herein. In addition, related elements or components can be variously arranged, as known in the art. Further, in the drawings, like reference numerals designate same or like parts throughout the several views.
FIG. 1 is a schematic perspective view of the structure of a battery pack shell according to an embodiment of the invention.
FIG. 2 is a top view of another battery pack shell according to an embodiment of the invention.
FIG. 3 is a schematic view of the configuration of a first fastener and a second fastener according to an embodiment of the invention.
FIG. 4 illustrates a cross-sectional view of FIG. 2 along direction X3 to direction X4.
FIG. 5 is a schematic view of the structure of still another battery pack shell according to an embodiment of the invention.
FIG. 6 is a partial enlarged schematic view of the solid-lined frame N in FIG. 5.
FIG. 7 illustrates a cross-sectional view of FIG. 2 along direction X1 to direction X2.
FIG. 8 is another sectional view of FIG. 2 along direction X5 to direction X6.
FIG. 9 is a schematic structural view of a battery pack according to an embodiment of the invention.

### DESCRIPTION OF THE EMBODIMENTS

The technical solutions in the exemplary embodiments of the disclosure will be described clearly and explicitly in conjunction with the drawings in the exemplary embodiments of the disclosure. The description proposed herein is just the exemplary embodiments for the purpose of illustrations only, not intended to limit the scope of the disclosure, so it should be understood that and various modifications and variations could be made thereto without departing from the scope of the disclosure.

In the description of the present disclosure, unless otherwise specifically defined and limited, the terms "first", "second" and the like are only used for illustrative purposes and are not to be construed as expressing or implying a relative importance. The term "plurality" is two or more. The term "and/or" includes any and all combinations of one or more of the associated listed items.

In particular, a reference to "the" object or "a" and "an" object is intended to denote also one of a possible plurality of such objects. Unless otherwise defined or described, the terms "connect", "fix" should be broadly interpreted, for example, the term "connect" can be "fixedly connect", "detachably connect", "integrally connect", "electrically connect" or "signal connect". The term "connect" also can be "directly connect" or "indirectly connect via a medium". For the persons skilled in the art, the specific meanings of the abovementioned terms in the present disclosure can be understood according to the specific situation.

Further, in the description of the present disclosure, it should be understood that spatially relative terms, such as "above", "below" "inside", "outside" and the like, are described based on orientations illustrated in the figures, but are not intended to limit the exemplary embodiments of the present disclosure.
In the context, it should also be understood that when an element or features is provided "outside" or "inside" of another element(s), it can be directly provided "outside" or "inside" of the other element, or be indirectly provided "outside" or "inside" of the another element(s) by an intermediate element.

In the related art, the battery pack shell may include a bottom guard plate, a liquid cooling plate, and a frame disposed in sequence. The bottom guard plate, the liquid cooling plate, and the frame may be fixed by fasteners, so that the fasteners pass through the bottom guard plate, the liquid cooling plate, and the frame in sequence. Moreover, multiple fasteners may be disposed around and along the frame, and such a fixing method can be referred to point fixing.

Meanwhile, the phrase of passing through herein refers to the following. When the outer surface of the fastener has a thread, the thread connects the bottom guard plate, the liquid cooling plate, and the frame correspondingly; when the outer surface of the fastener has no threads, the bottom guard plate, the liquid cooling plate, and the frame are all closer to the fastener (or the fastener is in contact with the bottom guard plate, the liquid cooling plate, and frame, respectively). Moreover, the phrase of passing through mentioned in the embodiments of the invention may refer to the same meaning.

To implement the sealing of the connection between the liquid cooling plate and the frame, a sealing strip may be disposed between the liquid cooling plate and the frame. With such a point fixing method, when the sealing strip is compressed, the sealing strip may be subject to uneven stress, resulting in uneven compression at different positions and in turn leading to poor sealing reliability and apparent failure in sealing.

Accordingly, the embodiments of the invention provide a battery pack shell configured to improve the sealing effect as well as implementing the fixation of the bottom guard plate, the bottom heat exchange plate, and the frame.

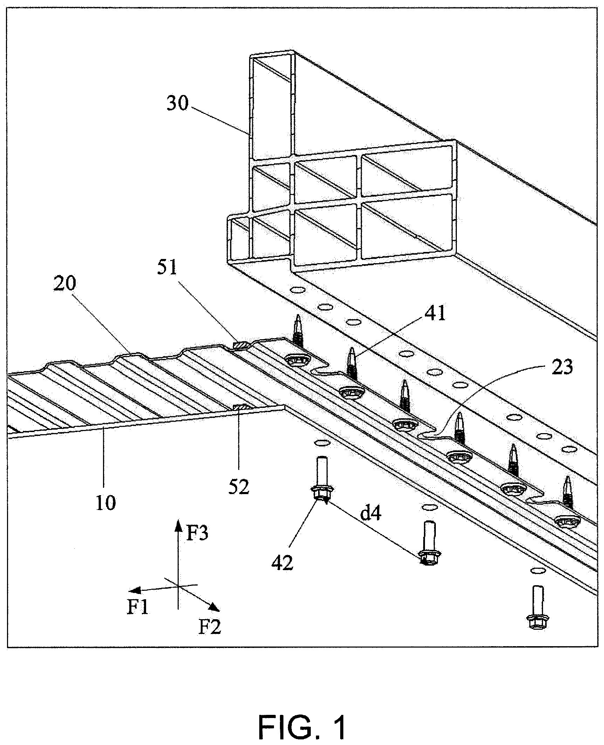

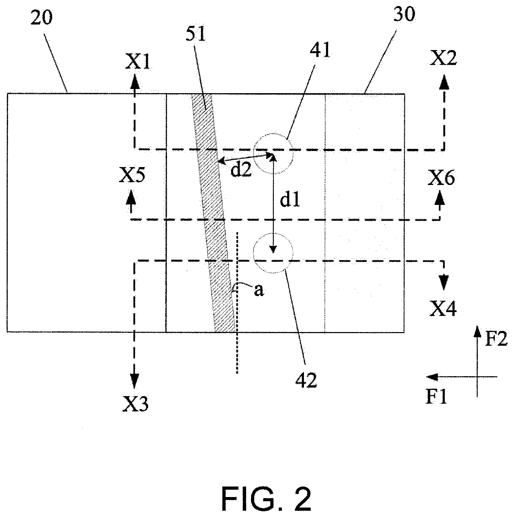

Specifically, an embodiment of the invention provides a battery pack shell, as shown in FIG. 1 and FIG. 2. The battery pack shell may include a bottom guard plate 10, a bottom heat exchange plate 20 and a frame 30 disposed on the bottom guard plate 10 in sequence.

A first sealing strip 51 is disposed between the bottom heat exchange plate 20 and the frame 30, and the first sealing strip 51 is configured to seal the connection between the bottom heat exchange plate 20 and the frame 30.

The bottom heat exchange plate 20 and the frame 30 are fixed by a first fastener 41 (meanwhile, this may be referred to point fixing, for the bottom heat exchange plate 20), the bottom guard plate 10 and the frame 30 are fixed by a second fastener 42, and the bottom heat exchange plate 20 is sandwiched between the bottom guard plate 10 and the frame 30. Multiple first fasteners 41 and second fasteners 42 are configured, and each of the first fasteners 41 and each of the second fasteners 42 are disposed around and along the frame 30 into a circle.

That is, while the fixation of the bottom guard plate 10 and the frame 30 is implemented, the bottom heat exchange plate 20 may be sandwiched between the bottom guard plate 10 and the frame 30 (meanwhile, this may be referred to surface fixing, for the bottom heat exchange plate 20). Accordingly, through the combination of point fixing and surface fixing, the fixation of the bottom heat exchange plate 20 may be implemented, and meanwhile stress may be evenly applied to the first sealing strip 51, so that the first sealing strip 51 is evenly compressed, thereby improving the sealing effect of the first sealing strip 51 and the sealing reliability.

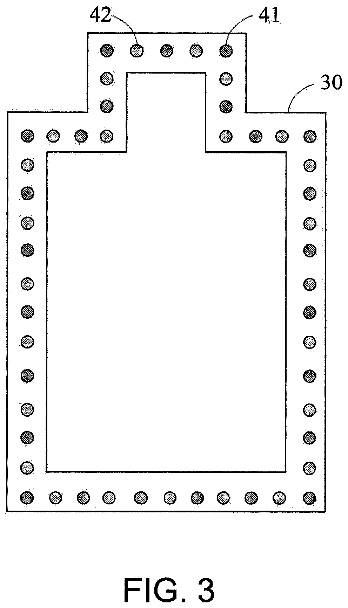

In addition, each of the first fasteners 41 and each of the second fasteners 42 are disposed around and along the frame 30 into a circle, which may be interpreted as follows. With reference to FIG. 3, when the orthographic projection of the frame 30 on the bottom guard plate (not shown in FIG. 3) is an inverted T shape polygon, the first fastener 41 and the second fastener 42 are disposed along the extending direction of each side of the inverted T shape polygon, and the first fastener 41 and the second fastener 42 are disposed around the inverted T shape polygon into a circle. To distinguish the first fastener 41 from the second fastener 42, the first fastener 41 is illustrated by a circle filled with slashes, the second fastener 42 is illustrated by a circle filled with black dots.

The orthographic projection of the frame on the bottom guard plate is not limited to the inverted T shape polygon. The inverted T shape polygon is illustrated as an example herein. In actual situations, the orthographic projection of the frame on the bottom guard plate may be configured to any shapes according to actual requirements, which the invention is not limited thereto.

A first distance d1 between the center of any adjacent first fasteners 41 and the center of second fastener 42 is 100 mm to 600 mm, the distance between one edge (the right edge as shown in FIG. 2) of the first sealing strip 51 facing the first fastener 41 and any one of the first fasteners 41 is a second distance d2, and the product of the first distance d1 and the second distance d2 is 400 mm² to 15000 mm².

Note that in some embodiments, the first sealing strip 51 may be disposed around and along the frame 30. Moreover, with reference to FIG. 2, taking a certain segment of the frame as an example, the extending direction of the first sealing strip 51 is the same as the extending direction of the certain segment of the frame 30. Alternatively, there may be a certain angle a between the extending direction of the first sealing strip 51 and the extending direction of the certain segment of the frame 30, as shown in FIG. 2, but the angle a shall be less than 90°. However, the angle a may be specifically set according to the width of the certain segment of the frame 30 (i.e., the length of the frame 30 along the F1 direction in FIG. 2) and the configuration positions of the first fastener 41 and the second fastener 42, as long as there is a certain distance from the first sealing strip 51 to the first fastener 41 and the second fastener 42. The specific angle a is not limited herein.

Accordingly, when the bottom heat exchange plate and the frame are fixed by the first fastener, and the bottom guard plate and the frame are fixed by the second fastener, different fasteners may be configured for fixing the bottom heat exchange plate and the frame and for fixing the bottom guard plate and the frame, respectively. Moreover, when the first sealing strip for sealing the connection between the frame and the bottom heat exchange plate is configured, the sealing of the connection between the frame and the bottom heat exchange plate may be implemented through the first sealing strip. Meanwhile, setting the first distance between the center of any adjacent first fasteners and a center of the second fastener and the second distance between one edge of the first sealing strip facing the first fastener and the center of any first fastener allows the first sealing strip to be subject to stress more evenly, and the first sealing strip may be effectively and evenly compressed, thereby implementing the fixation of the bottom guard plate, the bottom heat exchange plate, and the frame as well as improving the sealing performance of the battery pack shell.

Note that if the first distance is larger, it means that the first fastener is far away from the second fastener. Meanwhile, the second distance between the first sealing strip and the first fastener may be set smaller, and therefore effective stress may be applied to the first sealing strip through the first fastener and the second fastener, so that the first sealing strip has a sufficient amount of compression, thereby implementing the sealing effect.

If the first distance is smaller, it means that the first fastener is closer to the second fastener. Meanwhile, the second distance between the first sealing strip and the first fastener may be set larger, and therefore effective stress may still be applied to the first sealing strip through the first fastener and the second fastener, so that the first sealing strip has a sufficient amount of compression, thereby implementing the sealing effect.

Moreover, if the product of the first distance and the second distance is too small, it means that both the first distance and the second distance are small. Furthermore, it means that the first fasteners and the second fasteners are configured in a much closer manner. Meanwhile, it means that there is a relatively large quantity of the first fasteners and the second fasteners, which may result in not only assembly difficulties but also a bulky battery pack shell as well as high manufacturing cost.

If the product of the first distance and the second distance is too large, it means that both the first distance and the second distance are large. Furthermore, it means that the distance between the first fastener and the first sealing strip is large, which easily leads to the oversized frame and further the oversized battery pack shell, which is unfavorable to effective space utilization.

Therefore, by setting the first distance and the second distance, the first distance, the second distance, and the product of the first distance and the second distance may all fall in a suitable range, thereby improving the sealing effect of the battery pack shell and reducing the assembly difficulties as well as improving the space utilization.

In some embodiments, the first distance is 200 mm to 400 mm.

The second distance is 10 mm to 20 mm.

The product of the first distance and the second distance is 2000 mm² to 8000 mm².

Accordingly, by further setting the first distance, the second distance, and the product of the first distance and the second distance, the sealing effect of the battery pack shell may be further improved, the assembly difficulties may be further reduced, and the space utilization maybe improved.

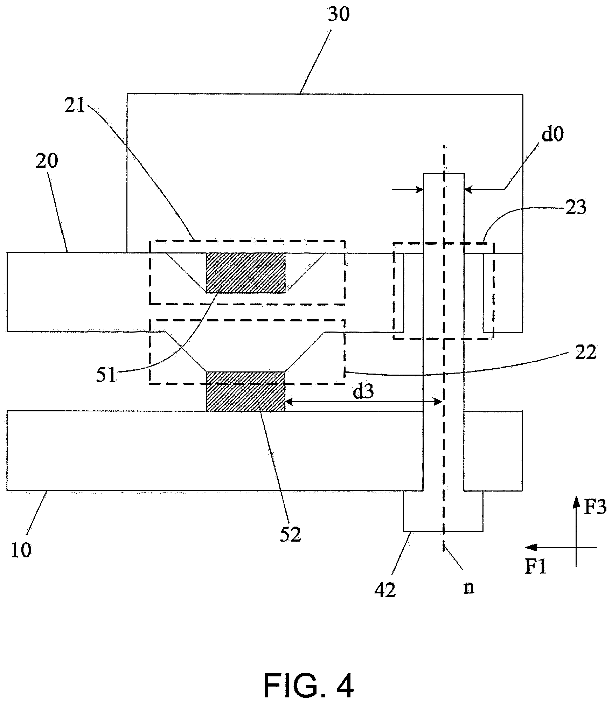

In some embodiments, as shown in FIG. 1 and FIG. 4, a second sealing strip 52 is disposed between the bottom guard plate 10 and the bottom heat exchange plate 20, and the second sealing strip 52 is configured to seal the connection between the bottom guard plate 10 and the bottom heat exchange plate 20.

The distance between one edge (the right edge as shown in FIG. 4) of the second sealing strip 52 facing the second fastener 42 and the center of any second fastener 42 is a third distance d3 (the dotted line n in FIG. 4 represents the central axis of the second fastener 42, and the central point is on the central axis). The fourth distance d4 between the centers of any two adjacent second fasteners 42 is 200 mm to 1000mm. The product of the third distance d3 and the fourth distance d4 is 1200 mm² to 20000 mm².

With reference to FIG. 1, the extending direction of the second sealing strip 52 may be the same as the extending direction of the first sealing strip 51, that is, the first sealing strip 51 and the second sealing strip 52 are correspondingly configured. In actual situations, the extending direction of the second sealing strip 52 may also be different from the extending direction of the first sealing strip 51, which may be configured specifically according to actual requirements, which is not limited herein.

Accordingly, with the configuration of the second sealing strip, dust, moisture and the like may be prevented from entering between the bottom heat exchange plate and the bottom guard plate. Therefore, the adverse effects on the heat exchange effect of the bottom heat exchange plate, resulting from dust, moisture, and the like, are prevented, thereby improving the reliability of the battery pack shell.

Moreover, the second fastener is configured to fix the bottom guard plate and the frame, so a certain stress is applied to the second sealing strip through the bottom guard plate. When the third distance between the second sealing strip and the center of the second fastener is larger, and when the fourth distance between the centers of the two second fasteners is also larger, the stress applied to the second sealing strip may be weakened, accordingly the amount of the compression of the second sealing strip is insufficient, and thereby the sealing effect is not good. Meanwhile, due to the large fourth distance, there is a waste of space.

If the third distance between the second sealing strip and the center of the second fastener is larger, the fourth distance may be set smaller, and sufficient stress may still be applied to the second sealing strip through the dense configuration of the second fasteners, so that the second sealing strip has a sufficient amount of compression, thereby implementing a favorable sealing effect.

If the fourth distance between the centers of the two second fasteners is larger, the third distance may be set smaller. Furthermore, even if the second fasteners are disposed sparsely, due to the short distance between the second fastener and the second sealing strip, sufficient stress may still be applied to the second sealing strip, so that the second sealing strip has a sufficient amount of compression, thereby implementing a favorable sealing effect.

In some embodiments, as shown in FIG. 4, a side surface (i.e., an upper surface of the bottom heat exchange plate 20 shown in FIG. 4) of the bottom heat exchange plate 20 facing the frame 30 has a groove 21, and the first sealing strip 51 is located within the groove 21.

Accordingly, the configuration of the first sealing strip may be facilitated, the first sealing strip is prevented from being dislocated or twisted during assembly, and meanwhile, the configuration can also play a role in positioning the assembly of the first sealing strip, which improves the assembly yield of the battery pack shell.

In addition, when the battery pack shell is in an environment at a high temperature, due to the heat exchange effect of the bottom heat exchange plate, the expansion of the first sealing strip and the second sealing strip resulting from the high temperature may be prevented, and thereby the battery pack shell may still have a favorable sealing effect even in an environment at a high temperature.

In some embodiments, to implement the sealing of the connection between the bottom heat exchange plate and the frame, when the first sealing strip is located within the groove, before the first sealing strip is compressed, the thickness of the first sealing strip may be greater than the depth of the groove, so that after the first sealing strip is compressed, and the first sealing strip may be in contact with the frame and the bottom of the groove respectively, thereby implementing the sealing of the connection.

In some embodiments, how thick the first sealing strip specifically is may be set according to factors such as the depth of the groove, the amount of the compression of the first sealing strip, the level of sealing requirements, the set height of the battery pack shell, and the like, which is not limited herein.

In some embodiments, as shown in FIG. 4, a side surface (i.e., a lower surface of the bottom heat exchange plate 20 shown in FIG. 4) of the bottom heat exchange plate 20 facing the bottom guard plate 10 has a protrusion 22 disposed opposite to the groove 21.

The second sealing strip 52 is disposed between the bottom guard plate 10 and the bottom heat exchange plate 20, and the second sealing strip 52 is located on the protrusion 22.

The groove is disposed opposite to the protrusion. In actual manufacture, the groove and the protrusion may be simultaneously processed on the bottom heat exchange plate by stamping.

Accordingly, with the configuration of the second sealing strip on the protrusion, the second sealing strip may be effectively compressed, thereby effectively improving the sealing performance of the connection between the bottom guard plate and the bottom heat exchange plate as well as improving the reliability of the battery pack shell.

In some embodiments, the first fastener is disposed between two adjacent second fasteners.

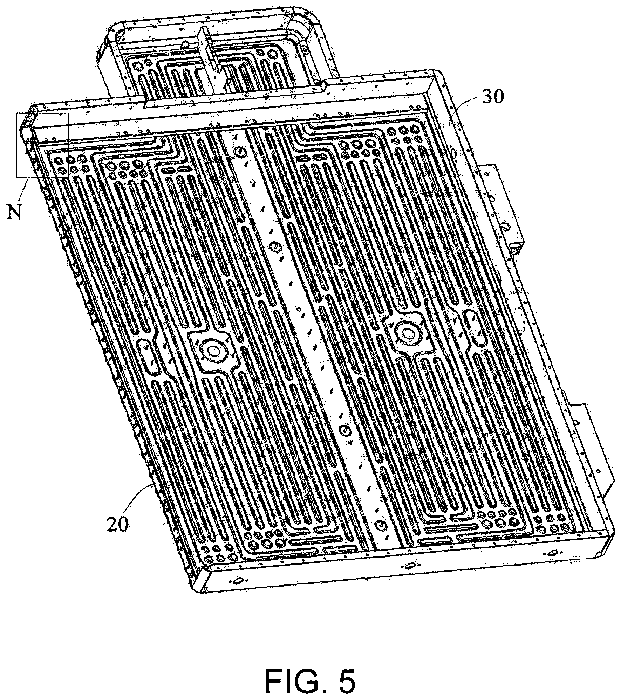

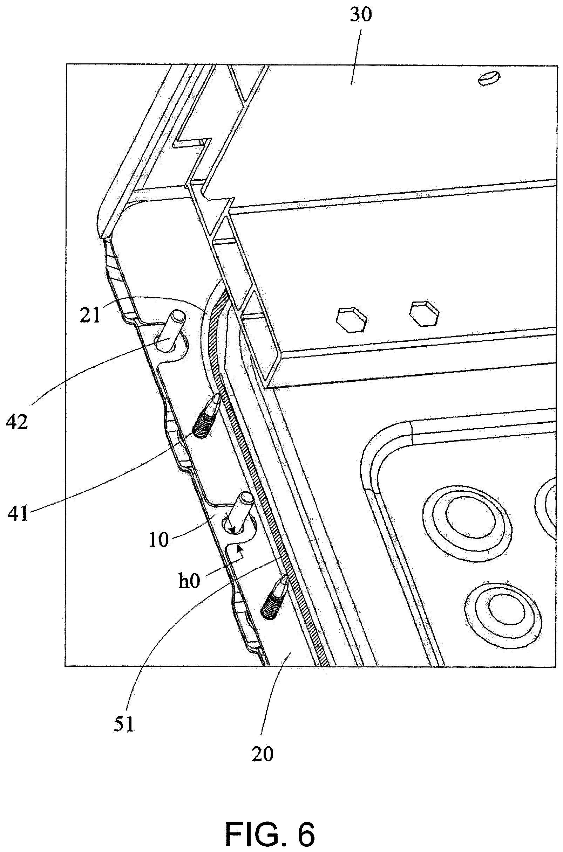

For example, as shown in FIG. 1, two first fasteners 41 are disposed between two second fasteners 42. Alternatively, as shown in FIG. 6, and FIG. 6 is a partial enlarged schematic view of the solid-lined frame N in FIG. 5, one first fastener 41 is disposed between two second fasteners 42, and the number of the first fasteners 41 disposed between the two second fasteners 42 is not limited to one or two but may also be three or more, which may be set according to actual requirements and is not limited herein.

This, accordingly, contributes to improving the fixing effect of the bottom guard plate and the frame as well as the bottom heat exchange plate and the frame and implementing the fixation evenly and effectively. Moreover, the uniformity of the compression of the first sealing strip may be further improved, and the sealing effect of the first sealing strip may be improved.

In some embodiments, as shown in FIG. 6, the first fasteners 41 and the second fasteners 42 are alternately disposed.

Only part of the bottom heat exchange plate 20, part of the bottom guard plate 10, and part of the frame 30 are illustrated in FIG. 6, so the number of the first fasteners 41 and the second fasteners 42 is not limited to the number illustrated in FIG. 6. The number of the first fasteners 41 and the second fasteners 42 may be set according to factors, such as the first distance and the fourth distance, which is not limited herein.

Accordingly, by configuring first fasteners and second fasteners in an alternated manner, the fixation of the frame and the bottom heat exchange plate and the fixation of the frame and the bottom guard plate may be implemented, making the fixation more stable and firm, preventing displacement between the frame and the bottom heat exchange plate and/or between the frame and the bottom guard plate, thereby improving the reliability of the battery pack shell and the safety of use.

In some embodiments, as shown in FIG. 6, the second fastener 42 is located at the center between two adjacent first fasteners 41, so the first fasteners 41 and the second fasteners 42 can be disposed in a more even manner, further allowing the fixation more stable and firm, and, therefore, improving the reliability of the battery pack shell and the safety of use.

In some embodiments, as shown in FIG. 1 and FIG. 6, the first fasteners 41 and the second fasteners 42 are disposed along the extending direction of the first sealing strip 51.

Accordingly, the bottom heat exchange plate, the bottom guard plate, and the frame may subject to stress more evenly, meanwhile the space occupied by the first fastener and the second fastener in the width direction of the first sealing strip may be reduced, and further the size of the frame in the width direction of the first sealing strip is prevented from being too large, thereby preventing the waste of space and improving space utilization. In addition, with the configuration of the first fastener and the second fastener along the extending direction of the first sealing strip, adverse effects on the configuration of the first sealing strip and the second sealing strip may be further prevented; and the complexity of the configuration of the first sealing strip, the second sealing strip, the groove, and the protrusion is further prevented, thereby reducing the difficulty in manufacturing the battery pack shell as well as improving the manufacturing yield.

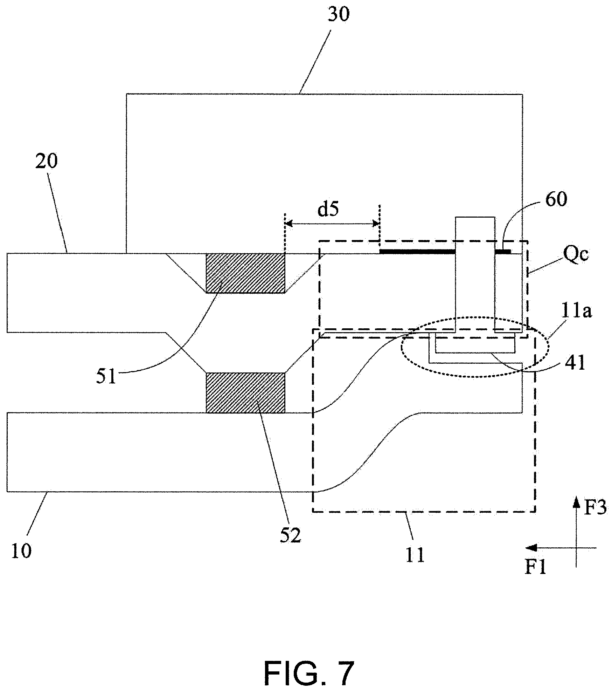

In some embodiments, as shown in FIG. 7, a sealant 60 is disposed between the frame 30 and the bottom heat exchange plate 20, and there is a distance between the sealant 60 and the first sealing strip 51.

In FIG. 7, the distance between the sealant 60 and the first sealing strip 51 may be represented by d5.

Moreover, as shown in FIG. 7, when the bottom heat exchange plate 20 and the frame 30 are fixed by the first fasteners 41, the sealant 60 may be located at the periphery of the first fasteners 41.

Accordingly, a sealant may be used to seal the first fastener near the first fastener to implement outer sealing, i.e. to implement the sealing at the position of the first fastener, the inner sealing may be implemented through the first sealing strip, therefore, double sealing may be implemented, and the sealing effect of the connection may be effectively improved.

In addition, because the sealant is generally fluid, the sealant may spread around due to the pressing of the bottom heat exchange plate and the frame during connection. Since there is a distance between the sealant and the first sealing strip giving space for the spread of the sealant, the contact between the sealant and the first sealing strip may be further prevented, and the failure of the first sealing strip resulting from the contact between the sealant and the first sealing strip is further prevented, thereby further improving the sealing effect of the connection.

In some embodiments, the value of d5 may be set according to factors such as the fluidity of the sealant, the amount of the sealant used, and the like. For example, if the fluidity of the sealant is high and the amount of the sealant used is large, the value of d5 may be set larger to prevent the sealant from spreading into the groove to be in contact with the sealing strip; if the fluidity of the sealant is low and the amount used is small, the value of d5 may be set smaller to prevent the waste of space, which contributes to saving space, thereby reducing the size of the battery pack shell.

In some embodiments, as shown in FIG. 4, the orthographic projections of the second fastener 42 and the bottom heat exchange plate 20 on the bottom guard plate 10 are not overlapped.

That is, the second fastener is required to pass through the bottom guard plate and the frame without passing through the bottom heat exchange plate, which reduces the number of structures through which the second fastener passes, facilitates the manufacturing, and reduces the difficulty in assembly. In addition, the direct fixation of the bottom guard plate and the frame may be implemented, and the stability of fixing the bottom guard plate and the frame may be improved.

In some embodiments, as shown in FIG. 1 and FIG. 4, the bottom heat exchange plate 20 has an avoidance structure 23, and the second fastener 42 passes through the avoidance structure 23.

The avoidance structure may be a notch (as shown in FIG. 1) or a through hole (as shown in FIG. 4), which may be set according to actual requirements, which is not limited herein.

Moreover, the phrase of passing through means that the second fastener only passes through the space yielded by the avoidance structure, and as shown in FIG. 6, there is a certain distance h0 between the second fastener 42 and the edge of the bottom heat exchange plate 20, so that the second fastener 42 may not be in contact with the bottom heat exchange plate 20.

Accordingly, since the bottom heat exchange plate is located between the bottom guard plate and the frame, when the bottom guard plate and the frame are fixed by the second fastener, with the configuration of the avoidance structure, the second fastener is prevented from passing through the bottom heat exchange plate, and the second fastener passes through the avoidance structure, thereby facilitating the assembly difficulty and improving the assembly efficiency.

In some embodiments, the size of the avoidance structure may be set according to the configuration position of the second fastener and the diameter of the fastening column of the second fastener (as the d0 shown in FIG. 4), as long as it is guaranteed that the fastening column may pass through the avoidance structure, which is not limited herein.

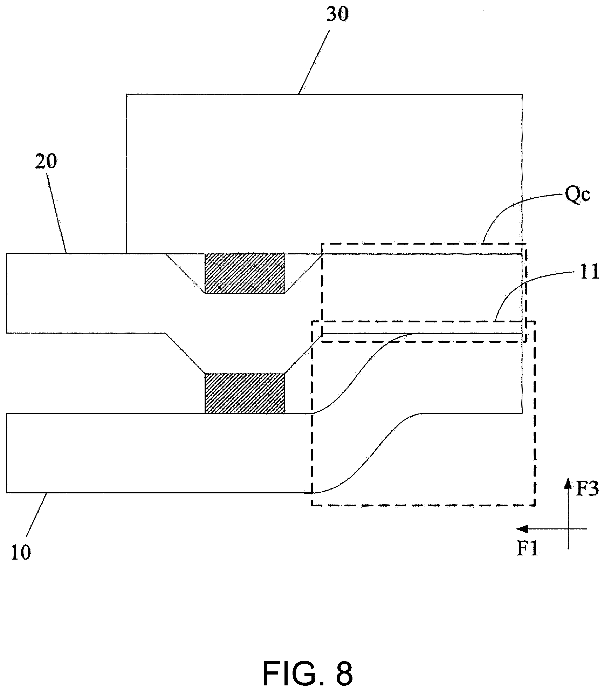

In some embodiments, as shown in FIG. 7 and FIG. 8, the bottom heat exchange plate 20 has an edge region Qc in contact with the frame 30, and the orthographic projection of the first fastener 41 on the bottom heat exchange plate 20 is located in the edge region Qc.

The bottom guard plate 10 has a bent portion 11. The bent portion 11 is bent toward the frame 30 and in contact with at least part of the edge region Qc of the bottom heat exchange plate 20.

As shown in FIG. 7, both the bottom guard plate 10 and the bottom heat exchange plate 20 are located below the frame 30, and the bottom heat exchange plate 20 is located between the bottom guard plate 10 and the frame 30. The edge region Qc of the bottom heat exchange plate 20 is in direct contact with the frame 30. When the bottom guard plate 10 and the frame 30 are fixed by the second fasteners 42, the bent portion 11 of the bottom guard plate 10 can be bent upward, so that the bent portion 11 is in contact with at least part of the edge region Qc of the bottom heat exchange plate 20, and during fixing, effective fixation of the bottom guard plate 10 and the frame 30 may be implemented.

Moreover, the edge region of the bottom heat exchange plate is in direct contact with the frame, and the bent portion is in direct contact with at least part of the edge region of the bottom heat exchange plate, so the contact between the bottom guard plate and the bottom heat exchange plate may be regarded as surface contact. When configuring the second fastener, with the fixation of the second fastener, the bottom guard plate and the frame press the bottom heat exchange plate respectively, and such pressing is surface pressing. As the stress of the surface pressing gradually increases, the bottom heat exchange plate may be stably fixed between the frame and the bottom guard plate, thereby forming a surface fixing. In combination with the point fixing formed when the frame and the bottom heat exchange plate are fixed by the first fastener, under the dual action of point fixing and surface fixing, the bottom heat exchange plate may be effectively fixed, the sealant and the first seal strip may be compressed more evenly when the sealant and the first seal are disposed between the bottom heat exchange plate and the frame, the adhesiveness of the sealant is favorable, and the sealing performance between the sealant and the first sealing strip is also more reliable, thereby improving the sealing effect.

In some embodiments, as shown in FIG. 7, for the bent portion 11, the bent portion 11 may have a concave portion 11a. The concave portion 11a is disposed at the configuration position of the first fastener 41 for avoiding the first fastener 41, so that an end of the first fastener 41 may be located in the concave portion 11a. Accordingly, the contact effect of the bent portion 11 and the edge region Qc of the bottom heat exchange plate 20 may be prevented from being affected by a certain thickness of the end of the first fastener 41. The effective contact between a region, other than the concave portion 11a and the region where the second fastener (not shown in FIG. 7) is disposed on the bent portion 11, and the edge region Qc of the bottom heat exchange plate 20 may be implemented.

In some embodiments, the specific form of the concave portion is not limited to that shown in FIG. 7. The concave portion may also be configured as follows. One side surface of the concave portion facing the first fastener is concave, and one side surface of the concave portion away from the first fastener is protruding.

In some embodiments, as shown in FIG. 5, an inner space may be formed by the frame 30 and the bottom heat exchange plate 20, and batteries (not shown in the drawing) may be disposed in the inner space.

Meanwhile, as shown in FIG. 5 and FIG. 6, each bottom surface of the frame 30 is connected to the bottom heat exchange plate 20, and the groove 21 and a protrusion (not shown in the drawing) opposite to the groove 21 are disposed on the bottom heat exchange plate 20. Meanwhile, the first sealing strip 51 is located in the groove 21, and the second sealing strip (not shown in the drawing) is disposed on the protrusion.

Both the groove 21 and the protrusion 22 may be disposed around and along the frame 30, and the first sealing strip 51 and the second sealing strip 52 may also be disposed around and along the frame 30 (although only part of the first sealing strip 51 is shown in the drawing, but this does not mean that the first sealing strip 51 may be disposed only in the position shown in the drawing). Therefore, the effective sealing of the connection between the bottom heat exchange plate 20 and the frame 30 and the effective sealing of the connection between the bottom heat exchange plate 20 and the bottom guard plate 10 may be implemented.

In the subsequent paragraphs, with reference to specific embodiments, an air tightness test is performed to test the sealing effect of the battery pack shell provided by the embodiments of the invention.

Before the test, the battery pack shell illustrated in the foregoing paragraphs is applied to the battery pack, and then the test is performed on the battery pack.

### 1. Test method:

The battery pack is inflated, the inflation pressure is 4.5KPa, the pressure is maintained at 4.5KPa, and the pressure holding time is 60s. The timing starts when the pressure holding time ends, and the pressure in the battery pack is tested when the timing reaches 60s.

### 2. Test conditions:

The test temperature is 25°C, and the humidity is 20%. Before the test, the battery pack is required to be set aside in the test environment for 2 hours or more; if it requires to repeat the test, the interval between each test time is 50 mins or more. During testing, perceptible airflow around the battery pack is excluded.

### 3. Test results:

The results of tests on the first distance and the second distance are shown in Table 1. d2 represents the second distance between the edge of the first sealing strip facing the first fastener and the center of any first fastener, d1 represents the first distance between the center of the adjacent first fasteners and the center of the second fastener. p represents the amount of leakage.

According to Table 1, conclusions are illustrated as follow.

In embodiment 1 to embodiment 9, the leakage of the battery pack is between 3.0Kpa and 14.7Kpa when d2 is 4 mm to 25 mm, d1 is 100 mm to 600 mm, and d2×d1 is 400 mm² to 15000 mm². In comparative example 1 and comparative example 2, when d2, d1, and d2×d1 are larger or smaller, the leakage amount of the battery pack is at least 26.9Kpa. The leakage amount increases significantly compared to the foregoing embodiments, and this means that the sealing effect of the battery pack may be effectively improved when d2, d1, and d2×d1 are set in an appropriate range.

**Table 1**

| No. | d2 (mm) | d1(mm) | d2xd1 (mm²) | P/KPa |
|---|---|---|---|---|
| Embodiment 1 | 4 | 300 | 1200 | 5.2 |
| Embodiment 2 | 15 | 300 | 4500 | 8.0 |
| Embodiment 3 | 25 | 300 | 7500 | 10.3 |
| Embodiment 4 | 4 | 100 | 400 | 3.0 |
| Embodiment 5 | 4 | 600 | 2400 | 6.4 |
| Embodiment 6 | 15 | 100 | 1500 | 5.5 |
| Embodiment 7 | 15 | 600 | 9000 | 11.0 |
| Embodiment 8 | 25 | 100 | 2500 | 6.5 |
| Embodiment 9 | 25 | 600 | 15000 | 14.7 |
| Comparative example 1 | 3 | 98 | 294 | 26.9 |
| Comparative example 2 | 27 | 605 | 16335 | 40.6 |

In addition, according to the first distance and the second distance, tests are further performed, and the test results are shown in Table 2. d2 represents the second distance between the edge of the first sealing strip facing the first fastener and the center of any first fastener, d1 represents the first distance between the center of the adjacent first fasteners and the center of the second fastener, P represents the leakage amount.

According to Table 2, conclusions are illustrated as follows.

By comparing embodiment 1 to embodiment 11, the leakage of the battery pack is between 4.1Kpa and 8.1Kpa when d2 is 10 mm to 20 mm, d1 is 200 mm to 400 mm, and d2×d1 is 2000 mm² to 8000 mm². This shows that by further setting the first distance, the second distance, and the product of the first distance and the second distance, the leakage of the battery pack may be further reduced, that is, the sealing effect of the battery pack shell may be further improved.

**Table 2**

| No. | d2 (mm) | d1(mm) | d2xd1 (mm2) | P/KPa |
|---|---|---|---|---|
| Embodiment 1 | 10 | 200 | 2000 | 4.1 |
| Embodiment 2 | 15 | 200 | 3000 | 5.8 |
| Embodiment 3 | 20 | 200 | 4000 | 6.9 |
| Embodiment 4 | 10 | 320 | 3200 | 5.9 |
| Embodiment 5 | 15 | 320 | 4800 | 7.2 |
| Embodiment 6 | 20 | 320 | 6400 | 7.9 |
| Embodiment 7 | 10 | 400 | 4000 | 6.5 |
| Embodiment 8 | 15 | 400 | 6000 | 7.2 |
| Embodiment 9 | 20 | 400 | 8000 | 8.1 |
| Embodiment 10 | 9 | 198 | 1782 | 10.3 |
| Embodiment 11 | 21 | 405 | 8505 | 12.2 |

The results of tests on the third distance and the fourth distance are shown in Table 3. d3 represents the third distance between the edge of the second sealing strip facing the second fastener and the center of any second fastener, d4 represents the fourth distance between the centers of two adjacent second fasteners, and P represents the amount of leakage.

According to Table 3, conclusions are illustrated as follows.

In Embodiment 1 to Embodiment 9, when d4 is 200 mm to 1000 mm, d3 is 6 mm to 20 mm, and d4×d3 is 1200 mm² to 20000 mm², the leakage amount of the battery pack is between 5.4Kpa and 14.9Kpa. In Comparative Example 1 and Comparative Example 2, when d4, d3, and d4×d3 are larger or smaller, the leakage amount of the battery pack is at least 27.7Kpa, the leakage amount increases significantly compared to the previous embodiments, it shows that by setting d4, d3, and d4×d3 in a suitable range, the sealing effect of the battery pack may be effectively improved.

**Table 3**

| No. | d4 (mm) | d3(mm) | d4xd3 (mm²) | P/KPa |
|---|---|---|---|---|
| Embodiment 1 | 200 | 6 | 1200 | 5.4 |
| Embodiment 2 | 600 | 6 | 3600 | 6.8 |
| Embodiment 3 | 1000 | 6 | 6000 | 9.0 |
| Embodiment 4 | 200 | 14 | 2800 | 6.2 |
| Embodiment 5 | 600 | 14 | 8400 | 9.4 |
| Embodiment 6 | 1000 | 14 | 14000 | 11.2 |
| Embodiment 7 | 200 | 20 | 4000 | 7.0 |
| Embodiment 8 | 600 | 20 | 12000 | 10.6 |
| Embodiment 9 | 1000 | 20 | 20000 | 14.9 |
| Comparative example 1 | 199 | 5 | 995 | 27.7 |
| Comparative example 2 | 1003 | 21 | 21063 | 32.8 |

In some embodiments, the bottom heat exchange plate may be, but is not limited to, a liquid cooling plate.

In some embodiments, in addition to the foregoing structures, the battery pack shell may also include other structures for implementing the function of the battery pack shell, which may be set according to actual requirements, which is not limited herein.

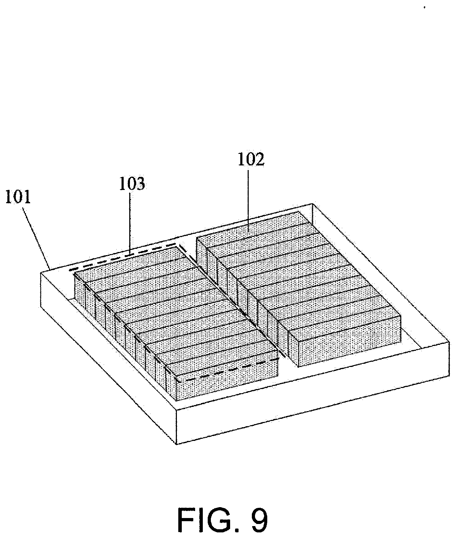

Based on the same inventive concept, the embodiments of the invention provide a battery pack, as shown in FIG. 9, which may include the battery pack shell 101 as provided in the embodiments of the invention, and a battery 102 disposed in the battery pack shell 101.

In some embodiments, as shown in FIG. 9, at least one battery pack 103 or battery module (not shown) may be disposed in the battery pack shell 101, and each battery pack 103 or battery module may include multiple batteries 102.

The number of batteries configured is not limited to that shown in FIG. 9. Specifically, the number of batteries configured may be set according to actual requirements, which is not limited herein.

In addition, the electrical connection relationship of every battery may be set as series connection, parallel connection or series-parallel connection according to actual requirements, which is not limited herein.

In some embodiments, in addition to the battery, other structures that may be disposed in the battery pack shell to implement the function of the battery pack. For example, but not limited to, a battery management system, a high-voltage power distribution box, and the like. The specific configuration may be according to actual requirements, which is not limited herein.

Other embodiments of the disclosure will be apparent to those skilled in the art from consideration of the specification and practice of the disclosure disclosed herein. The specification and embodiments are illustrative.

## Claims

1. A battery pack shell (101), comprising a bottom guard plate (10), a bottom heat exchange plate (20) and a frame (30) disposed on the bottom guard plate (10) in sequence;
wherein a first sealing strip (51) is disposed between the bottom heat exchange plate (20) and the frame (30), and the first sealing strip (51) is configured to seal a connection between the bottom heat exchange plate (20) and the frame (30); the bottom heat exchange plate (20) and the frame (30) are fixed by a first fastener (41), the bottom guard plate (10) and the frame (30) are fixed by a second fastener (42), and the bottom heat exchange plate (20) is sandwiched between the bottom guard plate (10) and the frame (30); a number of the first fasteners (41) and a number of the second fasteners (42) are plural, and each of the first fasteners (41) and each of the second fasteners (42) are disposed around and along the frame (30) into a circle;
wherein the battery pack shell (101) is **characterized in that**
a first distance between a center of any adjacent first fasteners (41) and a center of the second fastener (42) is 100 mm to 600 mm, a distance between an edge of the first sealing strip (51) facing the first fastener (41) and a center of any one of the first fasteners (41) is a second distance, and a product of the first distance and the second distance is 400 mm² to 15000 mm².

2. The battery pack shell (101) according to claim 1, wherein the first distance is 200 mm to 400 mm;
the product of the first distance and the second distance is 2000 mm² to 8000 mm².

3. The battery pack shell (101) according to claim 1, wherein the bottom heat exchange plate (20) has an edge region (Qc) in contact with the frame (30), and an orthographic projection of the first fastener (41) on the bottom heat exchange plate (20) is located in the edge region (Qc);
the bottom guard plate (10) has a bent portion (11), and the bent portion (11) is bent toward the frame (30) and in contact with at least part of the edge region (Qc) of the bottom heat exchange plate (20).

4. The battery pack shell (101) according to claim 1, wherein a second sealing strip (52) is disposed between the bottom guard plate (10) and the bottom heat exchange plate (20), and the second sealing strip (52) is configured to seal the connection between the bottom guard plate (10) and the bottom heat exchange plate (20);
a distance between an edge of the second sealing strip (52) facing the second fastener (42) and a center of any one of the second fasteners (42) is a third distance, a fourth distance between centers of any two adjacent second fasteners (42) is 200 mm to 1000mm, and a product of the third distance and the fourth distance is 1200 mm² to 20000 mm².

5. The battery pack shell (101) according to claim 1, wherein a side surface of the bottom heat exchange plate (20) facing the frame (30) has a groove (21), and the first sealing strip (51) is located in the groove (21).

6. The battery pack shell (101) according to claim 5, wherein a side surface of the bottom heat exchange plate (20) facing the bottom guard plate (10) has a protrusion (22) disposed opposite to the groove (21);
a second sealing strip (52) is disposed between the bottom guard plate (10) and the bottom heat exchange plate (20), and the second sealing strip (52) is located on the protrusion (22).

7. The battery pack shell (101) according to claim 1, wherein the second fastener (42) is disposed between adjacent first fasteners (41).

8. The battery pack shell (101) according to claim 7, wherein the first fasteners (41) and the second fasteners (42) are alternately disposed.

9. The battery pack shell (101) according to claim 8, wherein the second fastener (42) is located at a central position between two adjacent first fasteners (41).

10. The battery pack shell (101) according to claim 1, wherein a sealant (60) is disposed between the frame (30) and the bottom heat exchange plate (20), and there is a distance between the sealant (60) and the first sealing strip (51).

11. The battery pack shell (101) according to any one of claims 1 to 10, wherein an orthographic projection of the second fastener (42) and an orthographic projection of the bottom heat exchange plate (20) on the bottom guard plate (10) are not overlapped.

12. The battery pack shell (101) according to claim 11, wherein the bottom heat exchange plate (20) comprises an avoidance structure (23), and the second fastener (42) passes through the avoidance structure (23).

13. A battery pack (103), comprising the battery pack shell (101) according to any one of claims 1 to 12, and a battery (102) disposed within the battery pack shell (101).

## Patentansprüche

1. Batteriepackschale (101), die eine untere Schutzplatte (10), eine untere Wärmeaustauschplatte (20) und einen Rahmen (30) umfasst, die nacheinander auf der unteren Schutzplatte (10) angeordnet sind;
wobei ein erster Dichtungsstreifen (51) zwischen der unteren Wärmeaustauschplatte (20) und dem Rahmen (30) angeordnet ist und der erste Dichtungsstreifen (51) so konfiguriert ist, dass er eine Verbindung zwischen der unteren Wärmeaustauschplatte (20) und dem Rahmen (30) abdichtet; die untere Wärmeaustauschplatte (20) und der Rahmen (30) durch ein erstes Befestigungselement (41) befestigt sind, die untere Schutzplatte (10) und der Rahmen (30) durch ein zweites Befestigungselement (42) befestigt sind und die untere Wärmeaustauschplatte (20) zwischen der unteren Schutzplatte (10) und dem Rahmen (30) angeordnet ist; eine Anzahl der ersten Befestigungselemente (41) und eine Anzahl der zweiten Befestigungselemente (42) mehrfach vorhanden sind und jedes der ersten Befestigungselemente (41) und jedes der zweiten Befestigungselemente (42) um und entlang des Rahmens (30) kreisförmig angeordnet sind;
wobei die Batteriepackschale (101) **dadurch gekennzeichnet ist, dass**
ein erster Abstand zwischen einem Mittelpunkt benachbarter erster Befestigungselemente (41) und einem Mittelpunkt des zweiten Befestigungselements (42) 100 mm bis 600 mm beträgt, ein Abstand zwischen einem Rand des ersten Dichtungsstreifens (51), die dem ersten Befestigungselement (41) zugewandt ist, und einem Mittelpunkt eines der ersten Befestigungselemente (41) ein zweiter Abstand ist, und ein Produkt aus dem ersten Abstand und dem zweiten Abstand 400 mm² bis 15000 mm² beträgt.

2. Batteriepackschale (101) gemäß Anspruch 1, wobei der erste Abstand 200 mm bis 400 mm beträgt;
wobei das Produkt aus dem ersten Abstand und dem zweiten Abstand 2000 mm² bis 8000 mm² beträgt.

3. Batteriepackschale (101) gemäß Anspruch 1, wobei die untere Wärmeaustauschplatte (20) einen Randbereich (Qc) in Kontakt mit dem Rahmen (30) aufweist und eine orthografische Projektion des ersten Befestigungselements (41) auf der unteren Wärmeaustauschplatte (20) in dem Randbereich (Qc) angeordnet ist;
die untere Schutzplatte (10) einen gebogenen Abschnitt (11) aufweist und der gebogene Abschnitt (11) in Richtung des Rahmens (30) gebogen ist und mit mindestens einem Teil des Randbereichs (Qc) der unteren Wärmeaustauschplatte (20) in Kontakt steht.

4. Batteriepackschale (101) gemäß Anspruch 1, wobei ein zweiter Dichtungsstreifen (52) zwischen der unteren Schutzplatte (10) und der unteren Wärmeaustauschplatte (20) angeordnet ist und der zweite Dichtungsstreifen (52) so konfiguriert ist, dass er die Verbindung zwischen der unteren Schutzplatte (10) und der unteren Wärmeaustauschplatte (20) abdichtet;
ein Abstand zwischen einem Rand des zweiten Dichtungsstreifens (52), die dem zweiten Befestigungselement (42) zugewandt ist, und einer Mitte eines beliebigen der zweiten Befestigungselemente (42) ein dritter Abstand ist, ein vierter Abstand zwischen den Mitten von zwei beliebigen benachbarten zweiten Befestigungselementen (42) 200 mm bis 1000 mm beträgt, und ein Produkt des dritten Abstands und des vierten Abstands 1200 mm² bis 20000 mm² beträgt.

5. Batteriepackschale (101) gemäß Anspruch 1, wobei eine Seitenfläche der unteren Wärmeaustauschplatte (20), die dem Rahmen (30) zugewandt ist, eine Nut (21) aufweist und der erste Dichtungsstreifen (51) in der Nut (21) angeordnet ist.

6. Batteriepackschale (101) gemäß Anspruch 5, wobei eine Seitenfläche der unteren Wärmeaustauschplatte (20), die der unteren Schutzplatte (10) zugewandt ist, einen Vorsprung (22) aufweist, der gegenüber der Nut (21) angeordnet ist;
ein zweiter Dichtungsstreifen (52) zwischen der unteren Schutzplatte (10) und der unteren Wärmeaustauschplatte (20) angeordnet ist und der zweite Dichtungsstreifen (52) auf dem Vorsprung (22) angeordnet ist.

7. Batteriepackschale (101) gemäß Anspruch 1, wobei das zweite Befestigungselement (42) zwischen benachbarten ersten Befestigungselementen (41) angeordnet ist.

8. Batteriepackschale (101) gemäß Anspruch 7, wobei die ersten Befestigungselemente (41) und die zweiten Befestigungselemente (42) abwechselnd angeordnet sind.

9. Batteriepackschale (101) gemäß Anspruch 8, wobei das zweite Befestigungselement (42) an einer zentralen Position zwischen zwei benachbarten ersten Befestigungselementen (41) angeordnet ist.

10. Batteriepackschale (101) gemäß Anspruch 1, wobei ein Dichtungsmittel (60) zwischen dem Rahmen (30) und der unteren Wärmeaustauschplatte (20) angeordnet ist und zwischen dem Dichtungsmittel (60) und dem ersten Dichtungsstreifen (51) ein Abstand vorhanden ist.

11. Batteriepackschale (101) gemäß einem der Ansprüche 1 bis 10, wobei eine orthographische Projektion des zweiten Befestigungselements (42) und eine orthographische Projektion der unteren Wärmeaustauschplatte (20) auf der unteren Schutzplatte (10) nicht überlappen.

12. Batteriepackschale (101) gemäß Anspruch 11, wobei die untere Wärmeaustauschplatte (20) eine Umgehungsstruktur (23) umfasst und das zweite Befestigungselement (42) durch die Umgehungsstruktur (23) hindurchgeht.

13. Batteriepack (103), umfassend die Batteriepackschale (101) gemäß einem der Ansprüche 1 bis 12 und eine Batterie (102), die in der Batteriepackschale (101) angeordnet ist.

## Revendications

1. Boîtier de bloc-batterie (101), comprenant une plaque de protection inférieure (10), une plaque d'échange thermique inférieure (20) et un cadre (30) disposés successivement sur la plaque de protection inférieure (10) ;
dans lequel une première bande d'étanchéité (51) est disposée entre la plaque d'échange thermique inférieure (20) et le cadre (30), et la première bande d'étanchéité (51) est configurée pour sceller une connexion entre la plaque d'échange thermique inférieure (20) et le cadre (30) ; la plaque d'échange thermique inférieure (20) et le cadre (30) sont fixés par un premier élément de fixation (41), la plaque de protection inférieure (10) et le cadre (30) sont fixés au moyen d'un deuxième élément de fixation (42), et la plaque d'échange thermique inférieure (20) est prise en sandwich entre la plaque de protection inférieure (10) et le cadre (30) ; un certain nombre des premiers éléments de fixation (41) et un certain nombre des deuxièmes éléments de fixation (42) sont multiples, et chacun des premiers éléments de fixation (41) et chacun des deuxièmes éléments de fixation (42) sont disposés autour et le long du cadre (30) en formant un cercle ;
dans lequel le boîtier de bloc-batterie (101) est **caractérisé en ce qu'**une première distance entre un centre de deux premiers éléments de fixation (41) adjacents et un centre du deuxième élément de fixation (42) est comprise entre 100 mm et 600 mm, une distance entre un bord de la première bande d'étanchéité (51) faisant face au premier élément de fixation (41) et un centre de l'un quelconque des premiers éléments de fixation (41) est une deuxième distance, et le produit de la première distance et de la deuxième distance est compris entre 400 mm² et 15 000 mm².

2. Boîtier de bloc-batterie (101) selon la revendication 1, dans lequel la première distance est comprise entre 200 mm et 400 mm ; le produit de la première distance et de la deuxième distance est compris entre 2 000 mm² et 8 000 mm².

3. Boîtier de bloc-batterie (101) selon la revendication 1, dans lequel la plaque d'échange thermique inférieure (20) comporte une région de bord (Qc) en contact avec le cadre (30), et une projection orthogonale du premier élément de fixation (41) sur la plaque d'échange thermique inférieure (20) est située dans la région de bord (Qc) ;
la plaque de protection inférieure (10) comporte une partie pliée (11), et la partie pliée (11) est pliée vers le cadre (30) et est en contact avec au moins une partie de la zone de bord (Qc) de la plaque d'échange thermique inférieure (20).

4. Boîtier de bloc-batterie (101) selon la revendication 1, dans lequel une deuxième bande d'étanchéité (52) est disposée entre la plaque de protection inférieure (10) et la plaque d'échange thermique inférieure (20), et la deuxième bande d'étanchéité (52) est configurée pour étanchéifier la connexion entre la plaque de protection inférieure (10) et la plaque d'échange thermique inférieure (20) ;
une distance entre un bord de la deuxième bande d'étanchéité (52) faisant face au deuxième élément de fixation (42) et un centre de l'un quelconque des deuxièmes éléments de fixation (42) est une troisième distance, une quatrième distance entre les centres de deux deuxièmes éléments de fixation adjacents (42) est comprise entre 200 mm et 1 000 mm, et le produit de la troisième distance et de la quatrième distance est compris entre 1 200 mm² et 20 000 mm².

5. Boîtier de bloc-batterie (101) selon la revendication 1, dans lequel une surface latérale de la plaque d'échange thermique inférieure (20) faisant face au cadre (30) comporte une rainure (21), et la première bande d'étanchéité (51) est située dans la rainure (21).

6. Boîtier de bloc-batterie (101) selon la revendication 5, dans lequel une surface latérale de la plaque d'échange thermique inférieure (20) faisant face à la plaque de protection inférieure (10) comporte une saillie (22) disposée à l'opposé de la rainure (21) ;
une deuxième bande d'étanchéité (52) est disposée entre la plaque de protection inférieure (10) et la plaque d'échange thermique inférieure (20), et la deuxième bande d'étanchéité (52) est située sur la saillie (22).

7. Boîtier de bloc-batterie (101) selon la revendication 1, dans lequel le deuxième élément de fixation (42) est disposé entre des premiers éléments de fixation adjacents (41).

8. Boîtier de bloc-batterie (101) selon la revendication 7, dans lequel les premières attaches (41) et les deuxièmes attaches (42) sont disposées en alternance.

9. Boîtier de bloc-batterie (101) selon la revendication 8, dans lequel la deuxième attache (42) est située à une position centrale entre deux premières attaches adjacentes (41).

10. Boîtier de bloc-batterie (101) selon la revendication 1, dans lequel un produit d'étanchéité (60) est disposé entre le cadre (30) et la plaque d'échange thermique inférieure (20), et il existe une distance entre le produit d'étanchéité (60) et la première bande d'étanchéité (51).

11. Boîtier de bloc-batterie (101) selon l'une quelconque des revendications 1 à 10, dans lequel une projection orthographique de la deuxième fixation (42) et une projection orthographique de la plaque d'échange thermique inférieure (20) sur la plaque de protection inférieure (10) ne se chevauchent pas.

12. Boîtier de bloc-batterie (101) selon la revendication 11, dans lequel la plaque d'échange thermique inférieure (20) comprend une structure d'évitement (23), et la deuxième attache (42) passe à travers la structure d'évitement (23).

13. Bloc-batterie (103) comprenant le boîtier de bloc-batterie (101) selon l'une quelconque des revendications 1 à 12, et une batterie (102) disposée à l'intérieur du boîtier de bloc-batterie (101).
